# EUROPÄISCHE PATENTSCHRIFT

(11) **EP 2 738 897 B1**
(45) Veröffentlichungstag und Bekanntmachung des Hinweises auf die Patenterteilung: **08.07.2015**
(21) Anmeldenummer: 13401112.1
(22) Anmeldetag: 10.10.2013
(51) Int. Cl.: H02G 3/22, F16L 55/11

(54) **Blindstopfen**
Blank plug
Bouchon étanche

(30) Priorität: 01.12.2012 DE 102012023594
(43) Veröffentlichungstag der Anmeldung: 04.06.2014
(73) Patentinhaber: OBO Bettermann GmbH & Co. KG, 58710 Menden (DE)
(72) Erfinder:
(74) Vertreter: Köchling, Conrad-Joachim

(56) Entgegenhaltungen:
- WO-A1-03/022662
- WO-A1-2010/048465
- CN-U- 201 448 552
- DE-U1-202011 005 626
- GB-A- 2 265 432
- US-A1- 2004 084 099
- US-B1- 6 218 620

## Beschreibung

Die Erfindung betrifft einen Blindstopfen zum Einsatz in eine Lochung eines Gehäuses oder Gehäuseteiles, bestehend aus einem topfartigen, passend in eine entsprechende Lochung einsetzbaren Unterteil mit mündungsseitig umlaufendem Flanschrand.

Solche Blindstopfen sind im Stand der Technik bekannt, zum Beispiel aus der GB 2 265 432 A. Üblich ist die Anordnung solcher Blindstopfen, beispielsweise zum Verschluss von Lochungen eines Gehäuses oder Gehäuseteiles. Häufig weisen Gehäuse oder Gehäuseteile, insbesondere solche, die für elektrotechnische Zwecke bestimmt sind, eine Öffnung zum Einführen von Kabeln oder dergleichen auf. Auch ist eine solche Öffnung häufig für die Anordnung so genannter Kabelverschraubungen bestimmt, durch die eine abgedichtete Einführung von Kabeln oder dergleichen erfolgen kann. Blindstopfen sind häufig aus formstabilem Material gefertigt, beispielsweise geeigneten Kunststoffmaterialien, wie Polyamid, PVC, Polyäthylen oder dergleichen. Bei solchen Blindstopfen ergibt sich das Problem, dass bei einer nachträglichen Installation, beispielsweise beim nachträglichen Einführen von Kabeln oder auch beim Einsetzen von Nippeln zur Durchführung von Kabeln, das Durchsetzen des Bodens des Blindstopfens schwierig ist, da der Blindstopfen aus hartem Material besteht und folglich der Boden nicht einfach geöffnet werden kann.

In einem solchen Falle muss der Blindstopfen im Boden ausbrechbare Bestandteile aufweisen, um eine Durchinstallation zu ermöglichen.

Es sind auch Blindstopfen aus elastomerem Material bekannt oder aus gummiartigem Material. Bei solchen Blindstopfen ist es möglich, entsprechende Durchführungen von Kabeln oder dergleichen zu realisieren, in dem der Boden des Blindstopfens durch das Kabel selbst oder durch einen Schraubendreher durchstoßen wird. Durch die so erzeugte Lochung kann ein Kabel oder dergleichen abgedichtet hindurchgeführt werden. Die Anordnung eines Nippels, beispielsweise als Bestandteil einer Kabelverschraubung oder auch zu sonstigen Zwecken ist hierbei nicht möglich, weil der Nippel mit seinem Außengewinde nicht in den Blindstopfen eingeschraubt werden kann und somit keine sichere Verbindung zwischen dem Nippel und dem Blindstopfen erzeugt werden kann.

Ausgehend von diesem Stand der Technik liegt der Erfindung die Aufgabe zugrunde, einen Blindstopfen gattungsgemäßer Art zu schaffen, der einerseits eine vorzügliche Abdichtung einer entsprechenden Lochung einer Gehäusewandung oder dergleichen ermöglicht, andererseits aber auch die sichere und bestimmte Einsatzmöglichkeit für einen Gewindenippel oder dergleichen bildet.

Zur Lösung dieser Aufgabe schlägt die Erfindung vor, dass der Mantel des Unterteils aus wechselweise in Umfangsrichtung folgenden weichelastischen ersten Mantelzonen und hartplastischen zweiten Mantelzonen besteht, die miteinander fluiddicht verbunden sind, dass der Boden des Unterteils mindestens überwiegend aus weichelastischem Material besteht, welches fluiddicht mit den Mantelzonen verbunden ist, und dass die hartplastischen zweiten Mantelzonen innenseitig mit Gewindeabschnitten versehen sind, wobei die Gewindeabschnitte aller zweiten Mantelzonen ein durchgängiges Gewinde bilden.

Dadurch, dass der Mantel teilweise und der Boden aus weichelastischem Material, beispielsweise Elastomermaterial besteht, ist eine gute Abdichtung erreicht und auch das Durchstoßen des Bodens zum Zwecke der Durchmontage von Kabeln oder dergleichen ermöglicht. Dabei sind solche durch eine entsprechende Lochung des Bodens geführte Kabel durch das Material abgedichtet hindurchgeführt.

Durch die besondere Ausbildung der hartplastischen zweiten Mantelzonen mit innenseitigen Gewindeabschnitten ist es zudem möglich, in einen solchen Blindstopfen einen Nippel einzuschrauben, dessen Gewinde mit dem Gewinde der Gewindeabschnitte korrespondiert, so dass der entsprechende Gewindenippel in einfacher Weise ordnungsgemäß montiert und festgelegt werden kann. Ein solcher Gewindenippel kann auch Bestandteil einer Kabelverschraubung sein. Unter den Begriff "hartplastisch" sind Kunststoffmaterialien zu subsummieren, die keine Elastomere sind, sondern zum Beispiel PA, PE oder PVC.

Bevorzugt ist dabei vorgesehen, dass mindestens einige der zweiten Mantelzonen außenseitig Rastnasen aufweisen, die in Montagesolllage in der Lochung des Gehäuses oder Gehäuseteiles den Lochungsrand auf der dem Flanschrand abgewandten Seite untergreifen.

Durch diese Ausgestaltung ist es möglich, den Blindstopfen rastend in die entsprechende Lochung des Gehäuses oder Gehäuseteiles einzusetzen, so dass der Blindstopfen nach der Montage in der entsprechenden Lochung verliersicher gehalten ist. Da die zweiten Mantelzonen, die aus hartplastischem Material bestehen, die entsprechenden Rastnasen aufweisen, ist eine sichere Verrastung möglich und eine Entrastung nur dann möglich, wenn die Rasten durch entsprechende Manipulation radial zurückgedrängt werden, damit der Blindstopfen wieder aus der Lochung entfernt werden kann. Dadurch, dass die zweiten Mantelzonen mit den weichelastischen ersten Mantelzonen kombiniert sind, ist es in einfacher Weise möglich, einen solchen Blindstopfen mit Rastnasen in der entsprechenden Lochung zu montieren, weil die formstabilen Rastnasen beim Einschieben in die Lochung nach radial innen ausweichen können, weil das Material der weichelastischen ersten Mantelzonen eine Bewegung der hartplastischen zweiten Mantelzonen in radialer Richtung nach innen ermöglicht.

Bevorzugt ist zudem vorgesehen, dass die weichelastischen ersten Mantelzonen über angeformte Stege aus weichelastischem Material am Boden aus weichelastischem Material angeformt sind und über angeformte Stege aus weichelastischem Material mit einem die Unterseite des Flanschrandes bildenden Ringformteil aus weichelastischem Material verbunden sind.

Gemäß dieser Ausgestaltung ist ein weichelastisches Teil als selbständiges Element oder als Gesamtbestandteil des Blindstopfens gebildet, welches nicht nur die weichelastischen ersten Mantelzonen und den weichelastischen Boden aufweist, sondern dieses Element weist zudem ein die Unterseite des Flanschrandes bildendes Ringformteil aus weichelastischem Material auf, welches zu dichten Anordnung des Blindstopfens in der entsprechenden Gehäuselochung beiträgt.

Bevorzugt ist dabei vorgesehen, dass die hartplastischen zweiten Mantelzonen an einem die Oberseite des Flanschrandes bildenden Ringformteil aus hartplastischem Material angeformt sind.

Demzufolge ist ein zweites Element des Blindstopfens aus hartplastischem Material gebildet, welches die zweiten hartplastischen Mantelzonen umfasst und ein die Oberseite des Flanschrandes bildendes Ringformteil ebenfalls aus hartplastischem Material. Das Teil ist insgesamt somit formstabil und vorzüglich für die entsprechenden Einsatzzwecke geeignet. Dadurch, dass die hartplastischen zweiten Mantelzonen lediglich mit einem Ende an dem Ringformteil aus hartplastischem Material angeformt sind, können diese beim Einschieben in die entsprechende Lochung scharnieren, so dass der Einschubvorgang in einfacher Weise ermöglicht ist.

Bevorzugt ist zudem vorgesehen, dass die hartplastischen zweiten Mantelzonen an ihren dem Flanschrand abgewandten Enden nach radial innen gerichtete angeformte Stützflächen aufweisen.

Diese Stützflächen bilden beispielsweise Anschlagflächen, wenn ein Gewindenippel in den Blindstopfen eingeschraubt wird. Der Gewindenippel wird dann mit seinem Ende gegen die Stützflächen angeschraubt und kann nicht weiter eingeschraubt werden oder sogar durchgeschraubt werden, weil die Stützflächen dies verhindern.

Bevorzugt ist dabei vorgesehen, dass die weichelastischen Bestandteile an die hartplastischen Bestandteile im Bereich der gegenseitigen Berührungskanten oder -flächen aneinander angeformt sind.

Die Herstellung eines solchen Blindstopfens kann in geeigneter Weise in einem so genannten ZweiKomponenten-Spritzgießverfahren erfolgen, wobei üblicherweise zunächst die hartplastischen Bestandteile in einem Werkzeug urgeformt werden und durch entsprechende Teilöffnung des Werkzeuges Raum für die weichelastische Komponente geschaffen wird, die dann in einem zweiten Spritzvorgang eingespritzt und teilweise auf hartplastische Bestandteile aufgespritzt wird. Es wird damit ein einstückiger Blindstopfen aus den unterschiedlichen Materialien zur Verfügung gestellt.

Besonders bevorzugt ist vorgesehen, dass der Innendurchmesser des durch die zweiten, mit Gewindeabschnitten versehenen Mantelzonen gebildeten Teilkörpers kleiner ist als der Außendurchmesser eines in den Teilkörper einschraubbaren Gewindenippels, so dass in der Schraubsolllage dieser Teile die zweiten Mantelzonen radial aufgespreizt sind.

Gemäß dieser Ausgestaltung sind die Abmessungen des Blindstopfens so vorgenommen, dass der Innendurchmesser des Teilkörpers, der die mit Gewindeabschnitten versehenen zweiten Mantelzonen aufweist, geringer ist als der Außendurchmesser eines in den Teilkörper einschraubbaren Gewindenippels. Hierdurch wird erreicht, dass dann, wenn ein Gewindenippel in den Blindstopfen eingeschraubt wird, die zweiten, mit Gewindeabschnitten versehenen Mantelzonen aufgespreizt werden und somit der sichere Sitz in der Lochung des Gehäuses oder dergleichen verstärkt wird.

Ein Ausführungsbeispiel der Erfindung ist in der Zeichnung dargestellt und im Folgenden-näher beschrieben. Es zeigt:

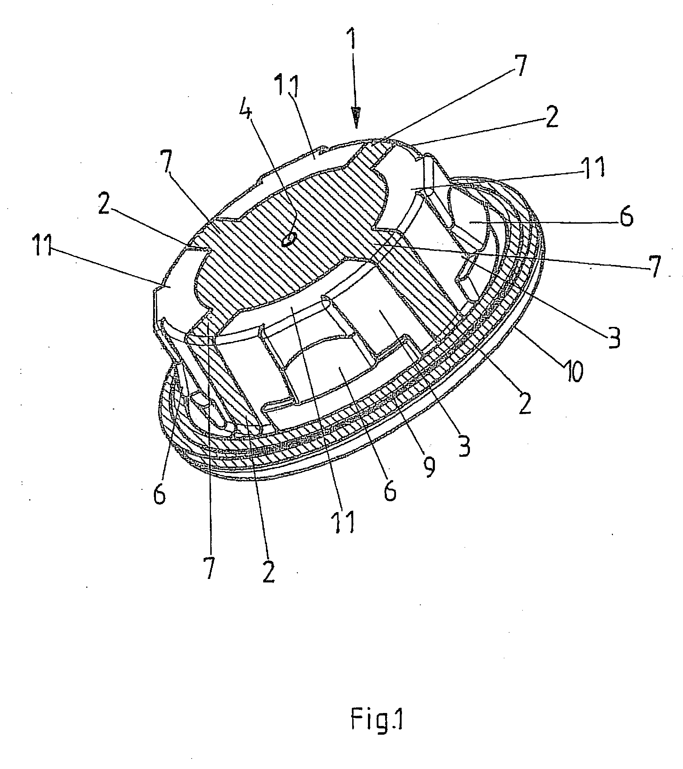

- Figur 1: einen erfindungsgemäßen Blindstopfen von schräg hinten gesehen;
- Figur 2: desgleichen von schräg vorn gesehen;
- Figur 3: eine Einzelheit des Blindstopfens von schräg vorn gesehen;
- Figur 4: eine weitere Einzelheit des Blindstopfens ebenfalls von schräg vorn gesehen.

In den Zeichnungen ist ein Blindstopfen 1 gezeigt, der zum Einsatz in eine kreisrunde Lochung eines Gehäuses oder Gehäuseteiles bestimmt ist. Das Gehäuseteil kann beispielsweise für elektrotechnische Installationen bestimmt sein. Durch den Blindstopfen ist es möglich, nachträglich Kabel oder dergleichen durch die Gehäusewandung im Bereich der Lochung einzuführen.

Der Blindstopfen 1 besteht aus einem topfartigen, passend in eine entsprechende Lochung einsetzbaren Unterteil mit mündungsseitig umlaufendem Flanschrand.

Der Mantel des Unterteils besteht aus wechselweise in Umfangsrichtung einander folgenden weichelastischen ersten Mantelzonen 2 und hartplastischen zweiten Mantelzonen 3, die miteinander an den benachbarten Randkanten fluiddicht verbunden sind. Beispielsweise können diese Materialien stoffschlüssig miteinander verbunden sein. Unter dem Begriff "weichelastisch" sind elastomere Materialien oder gummiartige Materialien zu verstehen. Unter dem Begriff "hartplastisch" sind Kunststoffmaterialien zu verstehen, die keine Elastomere sind, beispielsweise PVC, Polyäthylen, Polyamide oder dergleichen.

Der Boden 4 des Unterteils besteht zu mindestens überwiegend ebenfalls aus weichelastischem Material, welches wiederum fluiddicht mit den Mantelzonen 2,3 verbunden ist oder sogar einstückig mit diesem ausgebildet ist (Mantelzone 2).

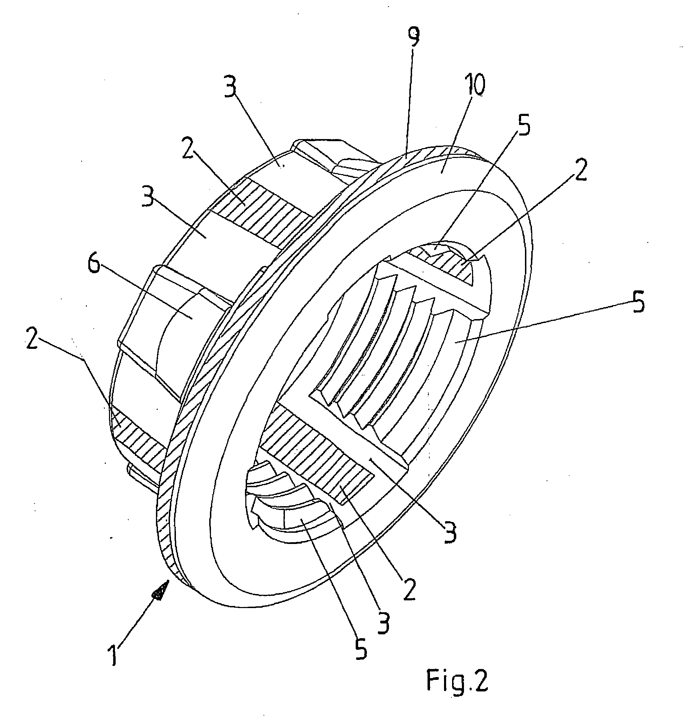

Wie insbesondere aus Figur 2 ersichtlich, weisen die zweiten hartplastischen Mantelzonen 3 innenseitig Gewindeabschnitte 5 auf, wobei die Gewindeabschnitte 5 aller zweiten Mantelzonen 3 gemeinsam ein durchgängiges Gewinde bilden.

Zusätzlich weisen im Ausführungsbeispiel alle zweiten Mantelzonen 3 außenseitig Rastnasen 6 auf, die in Montagesolllage, wenn also der Blindstopfen in eine Lochung eines Gehäuses oder dergleichen eingesteckt ist, auf der dem Flanschrand abgewandten Seite die Wandung des Gehäuses untergreifen.

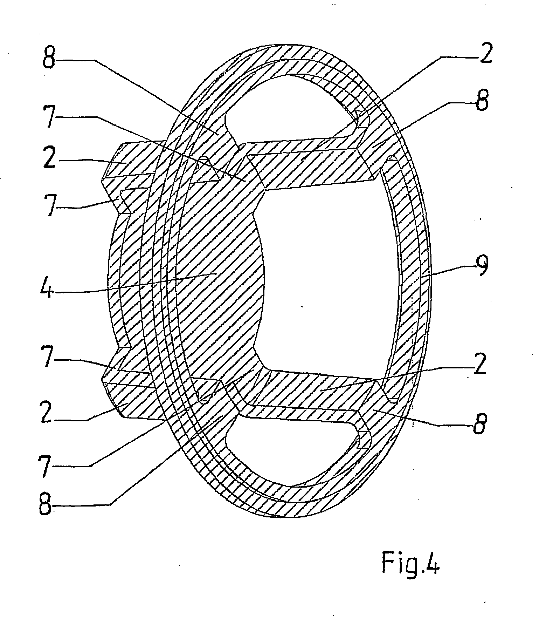

Wie insbesondere anhand der Figur 4 verdeutlicht, sind die weichelastischen ersten Mantelzonen 2 über angeformte Stege 7 aus weichelastischem Material am Boden 4 aus ebenfalls weichelastischem Material angeformt und über angeformte Stege 8 mit einem die Unterseite des Flanschrandes bildenden Ringformteil 9 aus weichelastischem Material einstückig ausgebildet.

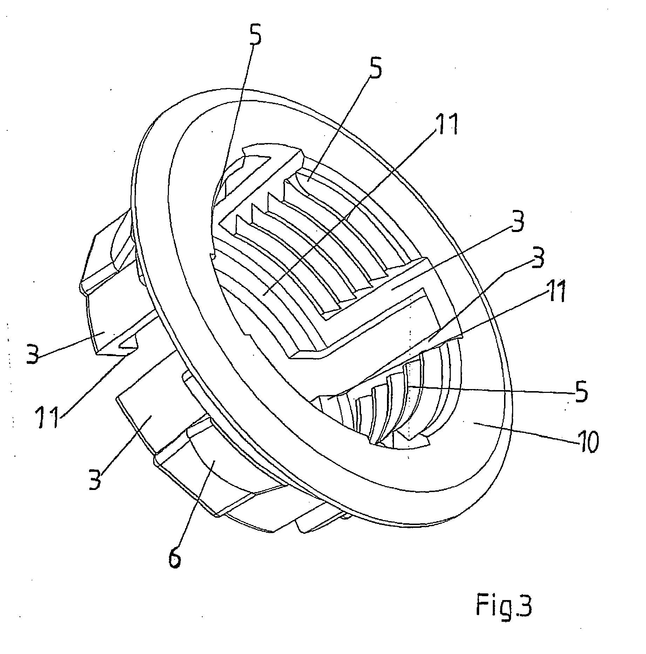

Wie anschaulich in Figur 3 dargestellt, sind die hartelastischen zweiten Mantelzonen 3 an einem die Oberseite des Flanschrandes bildenden Ringformteil 10 aus hartplastischem Material angeformt. Zusätzlich weisen die hartplastischen zweiten Mantelzonen 3 an ihrem dem Flanschrand abgewandten Ende nach radial innen gerichtete angeformte Stützflächen 11 auf. Vorzugsweise sind die weichelastischen Bestandteile und die hartplastischen Bestandteile im Bereich der gegenseitigen Berührungskanten oder Flächen aneinander angeformt und somit formdicht verbunden.

Zudem ist vorzugsweise der Innendurchmesser des durch die zweiten, mit Gewindeabschnitten 5 versehenen Mantelzonen 3 gebildeten Teilkörpers kleiner als der Außendurchmesser eines in diesen Teilkörper einschraubbaren Gewindenippels, so dass in der Schraubmontagesolllage diese Teile die zweiten Mantelzonen 3 radial aufspreizen und somit ein sicherer Sitz des Gewindenippels erreicht ist und ein sicherer Sitz des Blindstopfens in der entsprechenden Gehäuselochung. Die abgewinkelten angeformten Stützflächen 11 können dabei als Einschraubtiefenbegrenzung für den entsprechenden Nippel dienen.

In der Zeichnung ist der Übersichtlichkeit halber das Teil, welches aus weichelastischem Material besteht, in gestrichelten Linien gezeigt, während das Teil, welches aus hartplastischem Material besteht, ohne Strichelungen gezeigt ist.

Gewindenippel der angegebenen Art sind vorzugsweise Bestandteil von Kabelverschraubungen mit Druckschraube, Klemmkörper und Dichteinsatz, durch die eine abgedichtete und gegebenenfalls zugentlastete Einführung und Durchführung von elektrischen Kabeln ermöglicht ist.

Die Erfindung ist nicht auf das Ausführungsbeispiel beschränkt, sondern im Rahmen der beiliegenden Ansprüche vielfach variabel.

## Patentansprüche

1. Blindstopfen (1) zum Einsatz in eine Lochung eines Gehäuses oder Gehäuseteiles, bestehend aus einem topfartigen, passend in eine entsprechende Lochung einsetzbaren Unterteil mit mündungsseitig umlaufendem Flanschrand,
**dadurch gekennzeichnet, dass** der Mantel des Unterteils aus wechselweise in Umfangsrichtung einander folgenden weichelastischen ersten Mantelzonen (2) und hartplastischen zweiten Mantelzonen (3) besteht, die miteinander fluiddicht verbunden sind, dass der Boden (4) des Unterteils mindestens überwiegend aus weichelastischem Material besteht, welches fluiddicht mit den Mantelzonen (2,3) verbunden ist, und dass die hartplastischen zweiten Mantelzonen (3) innenseitig mit Gewindeabschnitten (5) versehen sind, wobei die Gewindeabschnitte (5) aller zweiten Mantelzonen (3) ein durchgängiges Gewinde bilden.

2. Blindstopfen nach Anspruch 1,
**dadurch gekennzeichnet, dass** mindestens einige der zweiten Mantelzonen (3) außenseitig Rastnasen (6) aufweisen, die in Montagesolllage in der Lochung des Gehäuses oder Gehäuseteiles den Lochungsrand auf der dem Flanschrand abgewandten Seite untergreifen.

3. Blindstopfen nach Anspruch 1 oder 2,
**dadurch gekennzeichnet, dass** die weichelastischen ersten Mantelzonen (2) über angeformte Stege (7) aus weichelastischem Material am Boden (4) aus weichelastischem Material angeformt sind und über angeformte Stege (8) aus weichelastischem Material mit einem die Unterseite des Flanschrandes bildenden Ringformteil (9) aus weichelastischem Material verbunden sind.

4. Blindstopfen nach einem der Ansprüche 1 bis 3,
**dadurch gekennzeichnet, dass** die hartplastischen zweiten Mantelzonen (3) an einem die Oberseite des Flanschrandes bildenden Ringformteil (10) aus hartplastischem Material angeformt sind.

5. Blindstopfen nach einem der Ansprüche 1 bis 4,
**dadurch gekennzeichnet, dass** die hartplastischen zweiten Mantelzonen (3) an ihren dem Flanschrand abgewandten Enden nach radial innen gerichtete angeformte Stützflächen (11) aufweisen.

6. Blindstopfen nach einem der Ansprüche 1 bis 5,
**dadurch gekennzeichnet, dass** die weichelastischen Bestandteile an die hartplastischen Bestandteile im Bereich der gegenseitigen Berührungskanten oder -flächen aneinander angeformt sind.

7. Blindstopfen nach einem der Ansprüche 1 bis 6,
**dadurch gekennzeichnet, dass** der Innendurchmesser des durch die zweiten, mit Gewindeabschnitten (5) versehenen Mantelzonen (3) gebildeten Teilkörpers kleiner ist als der Außendurchmesser eines in den Teilkörper einschraubbaren Gewindenippels, so dass in der Schraubsolllage dieser Teile die zweiten Mantelzonen (3) radial aufgespreizt sind.

## Claims

1. A blanking plug (1) for use in a hole of a housing or housing portion, consisting of a pot-like lower part to be fitted in a matching hole and having a circumferential flange edge at the mouth side, **characterized in that** the clad of the lower part consists of flexible first clad zones (2) and hard plastic second clad zones (3) alternately following each other in the circumferential direction, which are connected to each other in a fluid-tight manner, that the bottom (4) of the lower part mainly consists of a flexible material, which is connected to the clad zones (2, 3) in a fluid-tight manner, and that the hard plastic second clad zones (3) are provided with threaded sections (5) on their inner sides, the threaded sections (5) of all second clad zones (3) forming a continuing thread.

2. The blanking plug according to claim 1, **characterized in that** at least some of the second clad zones (3) include latch nibs (6) on the outer side that in the desired mounting position engage in the hole of the housing or housing portion beneath the hole edge on the side opposite to the flange edge.

3. The blanking plug according to claim 1 or 2, **characterized in that** the flexible first clad zones (2) are fitted through integral webs (7) of flexible material at the bottom (4) of flexible material and are connected through integral webs (8) of flexible material to an annular mold part (9) of flexible material forming the lower side of the flange edge.

4. The blanking plug according to one of the claims 1 to 3, **characterized in that** the hard plastic second clad zones (3) are formed on an annular mold part (10) of hard plastic material forming the upper side of the flange edge.

5. The blanking plug according to one of the claims 1 to 4, **characterized in that** the hard plastic second clad zones (3) include at their ends opposite to the flange edge radially inwardly directed integral support surfaces (11).

6. The blanking plug according to one of the claims 1 to 5, **characterized in that** the flexible components are formed on the hard plastic components in the area of the mutual contacting edges or surfaces.

7. The blanking plug according to one of the claims 1 to 6, **characterized in that** the inner diameter of the partial body formed by the second clad zones (3) provided with threaded sections (5) is smaller than the outer diameter of a threaded nipple to be threaded into the partial body, so that in the desired threading position of these parts the second clad zones (3) are radially deployed.

## Revendications

1. Bouchon obturateur (1) pour l'utilisation dans un trou d'un boîtier ou d'une partie de boîtier, consistant en une partie inférieure de type pot à être introduite dans un trou adapté et ayant un bord de bride périphérique au niveau de l'embouchure, **caractérisé en ce que** l'enveloppe de la partie inférieure consiste en des premières zones d'enveloppe (2) flexibles et des deuxièmes zones d'enveloppe (3) dures plastiques alternativement suivant les unes aux autres dans la direction périphérique, qui sont liées les unes aux autres d'une façon étanche aux fluides, que le fond (4) de la partie inférieure majoritairement consiste en un matériau flexible, qui est lié aux zones d'enveloppe (2, 3) d'une façon étanche aux fluides, et que les deuxièmes zones d'enveloppe (3) dures plastiques sont pourvues de sections filetées (5) au niveau de ses faces internes, les sections filetées (5) de toutes les deuxièmes zones d'enveloppe (3) formant un filetage continu.

2. Bouchon obturateur selon la revendication 1, **caractérisé en ce qu'**au moins quelques-unes des deuxièmes zones d'enveloppe (3) comportent des becs d'accrochage (6) extérieures, qui dans la position de montage de consigne s'engagent dans le trou du boîtier ou de la partie de boîtier au-dessous du bord du trou sur le côté opposé au bord de bride.

3. Bouchon obturateur selon la revendication 1 ou 2, **caractérisé en ce que** les premières zones d'enveloppe (2) flexibles sont formées par des entretoises (7) conjuguées en un matériau flexible au fond (4) du matériau flexible et sont liées par des entretoises (8) conjuguées en un matériau flexible à une pièce formée annulaire (9) en un matériau flexible formant le côté inférieur du bord de bride.

4. Bouchon obturateur selon une des revendications 1 à 3, **caractérisé en ce que** les deuxièmes zones d'enveloppe (3) dures plastiques sont réalisées sur une pièce formée annulaire (10) en un matériau dure plastique formant le côté supérieur du bord de bride.

5. Bouchon obturateur selon une des revendications 1 à 4, **caractérisé en ce que** les deuxièmes zones d'enveloppe (3) dures plastiques comportent à leurs extrémités opposées au bord de bride des surfaces d'appui (11) conjuguées orientées radialement.

6. Bouchon obturateur selon une des revendications 1 à 5, **caractérisé en ce que** les composants flexibles sont formées aux composants dures plastiques dans la région des arêtes ou surface de contact mutuelles.

7. Bouchon obturateur selon une des revendications 1 à 6, **caractérisé en ce que** le diamètre intérieur du corps partiel réalisé par les deuxièmes zones d'enveloppe (3) prévues de sections filetées (5) est inférieur au diamètre extérieur d'un embout fileté à être visser dans le corps partiel, de façon que dans la position de vissage de consigne de ces pièces les deuxièmes zones d'enveloppe (3) sont radialement déployées.
